# EUROPÄISCHE PATENTSCHRIFT

(11) **EP 4 155 140 B1**
(45) Veröffentlichungstag und Bekanntmachung des Hinweises auf die Patenterteilung: **04.03.2026**
(21) Anmeldenummer: 22181014.6
(22) Anmeldetag: 24.06.2022
(51) Int. Cl.: B60S 3/04, A46B 17/02, A46B 17/06, B08B 3/02

(54) **STIELBÜRSTENKOPF-AUFNAHME-BEHÄLTER FÜR FAHRZEUG-, INSBESONDERE KFZ-, WASCHANLAGEN**
BRUSH HEAD STORAGE CONTAINER FOR VEHICLE, ESPECIALLY MOTOR VEHICLE, WASHING SYSTEMS
RÉCIPIENT DE RÉCEPTION DE TÊTE DE BROSSE À MANCHE POUR INSTALLATIONS DE LAVAGE DE VÉHICULES, EN PARTICULIER DE VÉHICULES À MOTEUR

(30) Priorität: 28.09.2021 DE 202021105226 U
(43) Veröffentlichungstag der Anmeldung: 29.03.2023
(73) Patentinhaber: Rosenberger, Paul, 31863 Coppenbrügge (DE)
(72) Erfinder: Rosenberger, Paul, 31863 Coppenbrügge (DE)
(74) Vertreter: Habenicht, Wieland

(56) Entgegenhaltungen:
- AU-A- 2 117 467
- DE-A1- 2 820 527
- DE-U1- 202018 000 655
- DE-U1- 202021 105 226

## Beschreibung

Die Erfindung betrifft einen Stielbürstenkopf-Aufnahme-Behälter für Fahrzeug-, insbesondere Kfz-, Waschanlagen.

In vielen Kfz-Waschanlagen werden vor der eigentlichen Reinigung der Fahrzeuge diese mit Hilfe von Stielbürsten und deren Stielbürstenköpfen durch einen applizierten Wasser- und/oder Reinigungsflüssigkeits- Hochdruckstrahl vorgereinigt.

Aus dem Stand der Technik sind eine Reihe an Ausführungsformen von AufnahmeBehältern für Stielbürstenköpfe von Stielbürsten in/ für Kfz-Waschanlagen bekannt, bei denen im Wesentlichen ein Stielbürstenkopf einer Stielbürste von oben in einen quasi geschlossenen Behälter eingeführt und abgestellt wird. In der Regel wird der Stielbürstenkopf nicht gereinigt oder aber der Behälter weist einen seitlichen Schlitz auf, so dass der Stielbürstenkopf mit seinen Borsten mittels Waschflüssigkeit oder Wasser, meistens mittels eines Hochdruckstrahls, gereinigt werden kann.

DE 20 2018 000 655 U1 offenbart eine Aufnahmeeinrichtung zur Aufnahme einer Bürste mit einem Bürstenrücken und Borsten aufweisenden Bürstenkopf, wobei die Aufnahmeeinrichtung einen Innenraum zur Aufnahme des Bürstenkopfes bzw. der Borsten aufweist, wobei die Aufnahmeeinrichtung eine seitliche Reinigungsöffnung zur Reinigung des im Innenraum der Aufnahmevorrichtung aufgenommenen Bürstenkopfes aufweist.

Nachteilig hieran ist jedoch, dass eine Reinigung lediglich von der Seite möglich ist, die in vielen Fällen unbefriedigende Ergebnisse liefert.

Aufgabe der vorliegenden Erfindung ist es daher, die oben genannten Nachteile zu minimieren respektive zu beseitigen, somit einen Aufnahme-Behälter für Stielbürstenköpfe von Stielbürsten in/für Fahrzeug-, insbesondere Kfz-, Waschanlagen bereitzustellen, der eine gute Reinigungsmöglichkeit für die Borsten des Stielbürstenkopfes ermöglicht.

Diese Aufgabe wird erfindungsgemäß gelöst durch einen Stielbürstenkopf-Aufnahme-Behälter in/für Fahrzeug- insbesondere Kfz-, Waschanlagen nach Anspruch 1, eine Fahrzeug-, insbesondere Kfz-, Waschanlage nach Anspruch 17, ein Fahrzeug-, insbesondere Kfz-, Waschanlage-Reinigungsverfahren nach Anspruch 18 sowie eine Verwendung nach Anspruch 19.

Beim erfindungsgemäßen Stielbürstenkopf-Aufnahme-Behälter in/für Fahrzeug-, insbesondere Kfz-, Waschanlagen, handelt es sich um einen Behälter mit einem Aufnahme-Grundkörper, der mindestens eine Einführungsöffnung zum Einführen eines Stielbürstenkopfes einer Stielbürste mit aufweisenden Borsten aufweist, und mindestens eine zur Einführungsöffnung korrespondierende Reinigungsöffnung zum Reinigen des Stielbürstenkopfes und/oder seiner Borsten aufweist, dadurch gekennzeichnet, dass die Reinigungsöffnung derart ausgestaltet ist, dass sich die Borsten des Stielbürstenkopfes zumindest teilweise im Einsatz aus der Reinigungsöffnung erstrecken; dies wird beispielsweise und insbesondere realisiert im Rahmen der Ansprüche, Figuren und Patentbeschreibung.

In diesem Kontext ist es vorteilhaft, da bewährt, wenn dieser Behälter eine innere Stielbürsten-Führung, beispielsweise und insbesondere als Schräge, Krümmung, Wippe oder Absenkmechanismus, aufweist.

In diesem Kontext ist es vorteilhaft, da bewährt, wenn die innere Stielbürsten-Führung derart ausgestaltet ist, dass beim Durchführen der Stielbürste durch die innere Stielbürsten-Führung beim Durchführen des Stielbürstenkopfes durch die Reinigungsöffnung die Stielbürste mit ihrem oberen Stielende gegen einen oberen inneren Teil der inneren Stielbürsten-Führung aufläuft und sich die Stielbürste somit fixiert und daher ein Herausrutschen der Stielbürste verhindert.

In diesem Kontext ist es vorteilhaft, da bewährt, wenn die innere Stielbürsten-Führung derart ausgestaltet ist, dass beim Durchführen der Stielbürste durch die innere Stielbürsten-Führung beim Durchführen des Stielbürstenkopfes durch die Reinigungsöffnung die Stielbürste mit ihrem Stiel unterhalb ihres oberen Stielendes gegen einen diagonal gegenüber dem ersten, oberen inneren Teil angeordneten zweiten, mittleren bis unteren inneren Teil der inneren Stielbürsten-Führung aufläuft und somit eine Dreiflächen/Dreipunkt- Fixierung der Stielbürste innerhalb der inneren Stielbürsten-Führung realisiert ist.

Weiterhin ist es von Vorteil, da bewährt, wenn die Stielbürsten- Führung als Schräge, Krümmung, Wippe oder Absenkmechanismus ausgestaltet ist.

Darüber hinaus ist es vorteilhaft, da bewährt, wenn die Reinigungsöffnung derart ausgestaltet ist, dass sich im Einsatz die Borsten des Stielbürstenkopfes der Stielbürste vollständig aus der Reinigungsöffnung erstrecken.

Weiterhin ist es vorteilhaft, da bewährt, wenn unterhalb der Reinigungsöffnung eine Flüssigkeitsaufnahme angeordnet ist, derart, dass im Einsatz Flüssigkeit von den Borsten des Stielbürstenkopfes der Stielbürste aufgenommen wird.

Darüber hinaus ist es von Vorteil, da bewährt, wenn der erste, obere innere Teil eine Stielaufnahme aufweist, derart, dass im Einsatz der Stiel fixierend aufgenommen ist.

Weiterhin ist es vorteilhaft, da bewährt, wenn die Stielaufnahme konkav-bogenförmig oder konkav-halbkreisförmig ausgestaltet ist.

Darüber hinaus ist es von Vorteil, da bewährt, wenn der zweite, mittlere bis untere innere Teil eine Auflaufkante oder eine Auflauffläche aufweist, derart, dass im Einsatz der Stiel fixierend an der Auflaufkante oder der Auflauffläche anliegt.

Weiterhin ist es vorteilhaft, da bewährt, wenn der zweite, mittlere bis untere innere Teil als schräge Ebene ausgestaltet ist, derart, dass im Einsatz der Stielbürstenkopf der Stielbürste von oben in die sich nach unten verjüngende Öffnung einführbar/eingeführt ist.

Darüber hinaus ist es von Vorteil, da bewährt, wenn dieser Behälter mindestens ein zur Reinigungsöffnung seitliches Sichtfenster aufweist.

Weiterhin ist es vorteilhaft, da bewährt, wenn die Reinigungsöffnung mindestens ein Bürstenkopfretentionselement zum Verhindern des Durchfallens des Stielbürstenkopfes der Stielbürste aus der Reinigungsöffnung aufweist.

In diesem Kontext ist es vorteilhaft, da bewährt, wenn das Bürstenkopfretentionselement zapfenförmig ausgestaltet ist.

In diesem Kontext ist es von Vorteil, da bewährt, wenn die Reinigungsöffnung mehrere Bürstenkopfretentionselemente aufweist.

Weiterhin ist es vorteilhaft, da bewährt, wenn das mindestens eine Bürstenkopf-Retentionselement vertikal, horizontal oder diagonal ausgerichtet ist.

Weiterhin wird erfindungsgemäß beansprucht eine Fahrzeug-, insbesondere Kfz-, Waschanlage, aufweisend einen erfindungsgemäßen Stielbürstenkopf-Aufnahme-Behälter.

Darüber hinaus wird beansprucht ein Fahrzeug-, insbesondere Kfz-, Waschanlagen-Reinigungsverfahren, dadurch gekennzeichnet, dass ein erfindungsgemäßer Behälter und/oder eine erfindungsgemäße Fahrzeug-Waschanlage verwendet wird.

Schließlich wird beansprucht eine Verwendung eines erfindungsgemäßen Behälters und/oder einer erfindungsgemäßen Fahrzeug-Waschanlage zum Reinigen von Fahrzeugen.

Die Erfindung wird anhand des nachfolgenden Beispiels in nicht- beschränkender Weise näher erläutert, wobei
Figur 1 eine skizzenartige und dreidimensionale Funktionsdarstellung einer erfindungsgemäßen Ausführungsform des Stielbürstenkopf-Aufnahme-Behälters aufzeigt;
Figur 2 eine nahezu im Querschnitt von oben gesehen, skizzenartige Funktionsdarstellung der in Figur 1 aufgezeigten Ausführungsform des Stielbürstenkopf-Aufnahme-Behälters darstellt.

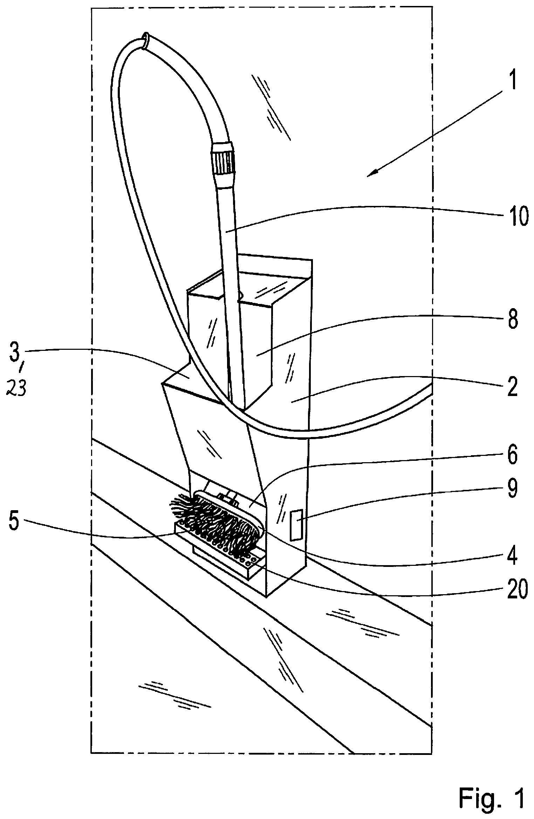

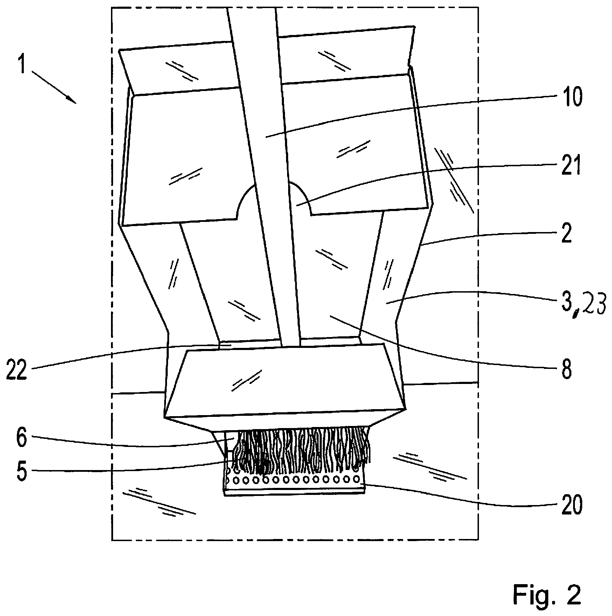

In den beiden Figuren 1 und 2 ist ein Stielbürstenkopf-Aufnahme-Behälter 1 in/für Fahrzeug-, insbesondere Kfz-, Waschanlagen zu erkennen, mit einem Aufnahme-Grundkörper 2, der mindestens eine Einführungsöffnung 3 zum Einführen eines Stielbürstenkopfes 4 einer Stielbürste 10 mit aufweisenden Borsten 5 aufweist, und mindestens eine zur Einführungsöffnung 3 korrespondierende Reinigungsöffnung 6 zum Reinigen des Stielbürstenkopfes 4 und/oder seiner Borsten 5 aufweist, dadurch gekennzeichnet, dass die Reinigungsöffnung 6 derart ausgestaltet ist, dass sich die Borsten 5 des Stielbürstenkopfes 4 zumindest teilweise im Einsatz aus der Reinigungsöffnung 6 erstrecken.

Der Behälter 1 weist eine innere Stielbürsten-Führung 8 auf.

Die innere Stielbürsten-Führung 8 ist derart ausgestaltet, dass beim Durchführen der Stielbürste 10 durch die innere Stielbürsten-Führung 8 beim Durchführen des Stielbürstenkopfes 4 durch die Reinigungsöffnung 6 die Stielbürste 10 mit ihrem oberen Stielende gegen den oberen inneren Teil der inneren Stielbürsten-Führung 8 aufläuft und sich die Stielbürste 10 somit fixiert und daher ein Herausrutschen der Stilbürste 10 verhindert.

Die innere Stielbürsten-Führung 8 ist derart ausgestaltet, dass beim Durchführen der Stielbürste 10 durch die innere Stielbürsten-Führung 8 beim Durchführen des Stielbürstenkopfes 4 durch die Reinigungsöffnung 6 die Stielbürste 10 mit ihrem Stiel unterhalb ihres oberen Stielendes gegen einen diagonal gegenüber dem ersten, oberen inneren Teil angeordneten zweiten, mittleren bis unteren inneren Teil der inneren Stielbürsten-Führung 8 aufläuft und somit eine Dreiflächen/Dreipunkt-Fixierung der Stielbürste 10 innerhalb der inneren Stielbürsten-Führung 8 realisiert ist.

Die Stielbürsten-Führung 8 ist als Schräge und Krümmung ausgestaltet.

Die Reinigungsöffnung 6 ist derart ausgestaltet, dass sich im Einsatz die Borsten 5 des Stielbürstenkopfes 4 der Stielbürste 10 vollständig aus der Reinigungsöffnung 6 erstrecken.

Unterhalb der Reinigungsöffnung 6 ist eine Flüssigkeitsaufnahme 20 angeordnet, derart, dass im Einsatz Flüssigkeit von den Borsten 5 des Stielbürstenkopfes 4 der Stielbürste 10 aufgenommen wird.

Der erste, obere innere Teil weist eine Stielaufnahme 21 auf, derart, dass im Einsatz der Stiel fixierend aufgenommen ist.

Die Stielaufnahme 21 ist konkav-halbkreisförmig ausgestaltet.

Der zweite, mittlere innere Teil weist eine Auflaufkante 22 auf, derart, dass im Einsatz der Stiel fixierend an der Auflaufkante 22 anliegt.

Der zweite, mittlere bis untere innere Teil ist als schräge Ebene ausgestaltet, derart, dass im Einsatz der Stielbürstenkopf 4 der Stielbürste 10 von oben in die sich nach unten verjüngende Öffnung 23 einführbar/eingeführt ist.

Der Behälter 1 weist ein zur Reinigungsöffnung 6 seitliches Sichtfenster 9 auf.

Die Reinigungsöffnung 6 weist mindestens ein Bürstenkopfretentionselement 7 (nicht gezeigt, da optional) zum Verhindern des Durchfallens des Stielbürstenkopfes 4 der Stielbürste 10 aus der Reinigungsöffnung 6 auf.

Das Bürstenkopfretentionselement 7 (nicht gezeigt, da optional) ist zapfenförmig (zahnförmig) ausgestaltet.

Die Reinigungsöffnung 6 weist mehrere Bürstenkopfretentionselemente 7 (nicht gezeigt, da optional) auf.

Das mindestens eine Bürstenkopf-Retentionselement 7 (nicht gezeigt, da optional) ist vertikal, horizontal oder diagonal ausgerichtet.

Der in den Figuren 1 und 2 aufgezeigte Behälter wird eingesetzt in einer Fahrzeug-Waschanlage und zum Reinigen von Fahrzeugen.

## Patentansprüche

1. Stielbürstenkopf-Aufnahme-Behälter (1) für Fahrzeug-, insbesondere Kfz-, Waschanlagen, mit einem Aufnahme- Grundkörper (2), der mindestens eine Einführungsöffnung (3) zum Einführen eines Stielbürstenkopfes (4) einer Stielbürste (10) mit aufweisenden Borsten (5) aufweist, und mindestens eine zur Einführungsöffnung (3) korrespondierende Reinigungsöffnung (6) zum Reinigen des Stielbürstenkopfes (4) und/oder seiner Borsten (5) aufweist, **dadurch gekennzeichnet, dass** die Reinigungsöffnung (6) derart ausgestaltet ist, dass sich die Borsten (5) des Stielbürstenkopfes (4) zumindest teilweise im Einsatz aus der Reinigungsöffnung (6) erstrecken.

2. Behälter (1) nach Anspruch 1, **dadurch gekennzeichnet, dass** dieser (1) eine innere Stielbürsten-Führung (8) aufweist.

3. Behälter (1) nach Anspruch 2, **dadurch gekennzeichnet, dass** die innere Stielbürsten-Führung (8) derart ausgestaltet ist, dass beim Durchführen der Stielbürste (10) durch die innere Stielbürsten- Führung (8) beim Durchführen des Stielbürstenkopfes (4) durch die Reinigungsöffnung (6) die Stielbürste (10) mit ihrem oberen Stielende gegen einen oberen inneren Teil der inneren Stielbürsten-Führung (8) aufläuft und sich die Stielbürste (10) somit fixiert und daher ein Herausrutschen der Stielbürste (10) verhindert.

4. Behälter nach Anspruch 3, **dadurch gekennzeichnet, dass** die innere Stielbürsten-Führung (8) derart ausgestaltet ist, dass beim Durchführen der Stielbürste (10) durch die innere Stielbürsten- Führung (8) beim Durchführen des Stielbürstenkopfes (4) durch die Reinigungsöffnung (6) die Stielbürste (10) mit ihrem Stiel unterhalb ihres oberen Stielendes gegen einen diagonal gegenüber dem ersten, oberen inneren Teil angeordneten zweiten, mittleren bis unteren inneren Teil der inneren Stielbürsten-Führung (8) aufläuft und somit eine Dreiflächen/Dreipunkt-Fixierung der Stielbürste (10) innerhalb der inneren Stielbürsten-Führung (8) realisiert ist.

5. Behälter (1) nach einem der Ansprüche 2 bis 4, **dadurch gekennzeichnet, dass** die Stielbürsten-Führung (8) als Schräge, Krümmung, Wippe oder Absenkmechanismus ausgestaltet ist.

6. Behälter (1) nach einem der Ansprüche 1 bis 5, **dadurch gekennzeichnet, dass** die Reinigungsöffnung (6) derart ausgestaltet ist, dass sich im Einsatz die Borsten (5) des Stielbürstenkopfes (4) der Stielbürste (10) vollständig aus der Reinigungsöffnung (6) erstrecken.

7. Behälter (1) nach einem der Ansprüche 1 bis 6, **dadurch gekennzeichnet, dass** unterhalb der Reinigungsöffnung (6) eine Flüssigkeitsaufnahme (20) angeordnet ist, derart, dass im Einsatz Flüssigkeit von den Borsten (5) des Stielbürstenkopfes (4) der Stielbürste (10) aufgenommen wird.

8. Behälter (1) nach einem der Ansprüche 1 bis 7, **dadurch gekennzeichnet, dass** der erste, obere innere Teil eine Stielaufnahme (21) aufweist, derart, dass im Einsatz der Stiel fixierend aufgenommen ist.

9. Behälter (1) nach Anspruch 8, **dadurch gekennzeichnet, dass** die Stielaufnahme (21) konkav-bogenförmig oder konkav- halbkreisförmig ausgestaltet ist.

10. Behälter (1) nach einem der Ansprüche 4 bis 9, **dadurch gekennzeichnet, dass** der zweite, mittlere bis untere innere Teil eine Auflaufkante (22) oder eine Auflauffläche (22) aufweist, derart, dass im Einsatz der Stiel fixierend an der Auflaufkante (22) oder der Auflauffläche (22) anliegt.

11. Behälter (1) nach einem der Ansprüche 4 bis 10, **dadurch gekennzeichnet, dass** der zweite, mittlere bis untere innere Teil als schräge Ebene ausgestaltet ist, derart, dass im Einsatz der Stielbürstenkopf (4) der Stielbürste (10) von oben in die sich nach unten verjüngende Öffnung (23) einführbar/eingeführt ist.

12. Behälter (1) nach einem der Ansprüche 1 bis 11, **dadurch gekennzeichnet, dass** dieser (1) mindestens ein zur Reinigungsöffnung (6) seitliches Sichtfenster (9) aufweist.

13. Behälter (1) nach einem der Ansprüche 1 bis 12, **dadurch gekennzeichnet, dass** die Reinigungsöffnung (6) mindestens ein Bürstenkopfretentionselement (7) zum Verhindern des Durchfallens des Stielbürstenkopfes (4) der Stielbürste (10) aus der Reinigungsöffnung (6) aufweist.

14. Behälter (1) nach einem der Ansprüche 1 bis 13, **dadurch gekennzeichnet, dass** das Bürstenkopfretentionselement (7) zapfenförmig ausgestaltet ist.

15. Behälter (1) nach einem der Ansprüche 13 bis 14, **dadurch gekennzeichnet, dass** die Reinigungsöffnung (6) mehrere Bürstenkopfretentionselemente (7) aufweist.

16. Behälter (1) nach einem der Ansprüche 13 bis 15, **dadurch gekennzeichnet, dass** das mindestens eine Bürstenkopf- Retentionselement (7) vertikal, horizontal oder diagonal ausgerichtet ist.

17. Fahrzeug-, insbesondere Kfz-, Waschanlage, aufweisend einen Behälter (1) nach einem der Ansprüche 1 bis 16.

18. Fahrzeug-, insbesondere Kfz-, Waschanlagen- Reinigungsverfahren, **dadurch gekennzeichnet, dass** ein Behälter nach einem der Ansprüche 1 bis 16 und/oder eine Fahrzeug- Waschanlage nach Anspruch 17 verwendet wird.

19. Verwendung eines Behälters nach einem der Ansprüche 1 bis 16 und/oder einer Fahrzeug-Waschanlage nach Anspruch 17 zum Reinigen von Fahrzeugen.

## Claims

1. Handle brush head holder container (1) for vehicle, in particular motor vehicle, washing systems, with a holder base body (2), which has at least one insertion opening (3) for inserting a handle brush head (4) of a handle brush (10) with bristles (5), and at least one cleaning opening (6) corresponding to the insertion opening (3) for cleaning the handle brush head (4) and/or its bristles (5), **characterized in that** the cleaning opening (6) is designed in such a way that the bristles (5) of the handle brush head (4) extend at least partially out of the cleaning opening (6) during use.

2. Container (1) according to claim 1, **characterized in that** it (1) has an inner handle brush guide (8).

3. Container (1) according to claim 2, **characterized in that** the inner handle brush guide (8) is designed in such a way that when the handle brush (10) is passed through the inner handle brush guide (8), the handle brush head (4) through the cleaning opening (6), the handle brush (10) runs up with its upper handle end against an upper inner part of the inner handle brush guide (8) and the handle brush (10) is thus fixed and therefore prevents the handle brush (10) from slipping out.

4. Container according to claim 3, **characterized in that** the inner handle brush guide (8) is designed such that when the handle brush (10) is passed through the inner handle brush guide (8) when the handle brush head (4) is passed through the cleaning opening (6), the handle brush (10) runs with its handle below its upper handle end against a second, middle to lower inner part of the inner handle brush guide (8) arranged diagonally opposite the first, upper inner part, thus realizing a three-surface/three-point fixation of the handle brush (10) within the inner handle brush guide (8).

5. Container (1) according to one of claims 2 to 4, **characterized in that** the handle brush guide (8) is designed as a slope, curve, rocker, or lowering mechanism.

6. Container (1) according to one of claims 1 to 5, **characterized in that** the cleaning opening (6) is designed in such a way that, during use, the bristles (5) of the handle brush head (4) of the handle brush (10) extend completely out of the cleaning opening (6).

7. Container (1) according to one of claims 1 to 6, **characterized in that** a liquid receptacle (20) is arranged below the cleaning opening (6) in such a way that, during use, liquid is collected by the bristles (5) of the handle brush head (4) of the handle brush (10).

8. Container (1) according to one of claims 1 to 7, **characterized in that** the first, upper inner part has a handle receptacle (21) such that the handle is held in place during use.

9. Container (1) according to claim 8, **characterized in that** the handle receptacle (21) is designed to be concave-arched or concave-semicircular.

10. Container (1) according to one of claims 4 to 9, **characterized in that** the second, middle to lower inner part has a ramp edge (22) or a ramp surface (22) such that, when in use, the handle rests against the ramp edge (22) or the ramp surface (22) in a fixed manner.

11. Container (1) according to one of claims 4 to 10, **characterized in that** the second, middle to lower inner part is designed as a sloping plane, such that, during use, the handle brush head (4) of the handle brush (10) can be inserted/is inserted from above into the downwardly tapering opening (23).

12. Container (1) according to one of claims 1 to 11, **characterized in that** it (1) has at least one side viewing window (9) adjacent to the cleaning opening (6).

13. Container (1) according to one of claims 1 to 12, **characterized in that** the cleaning opening (6) has at least one brush head retention element (7) to prevent the handle brush head (4) of the handle brush (10) from falling out of the cleaning opening (6).

14. Container (1) according to any one of claims 1 to 13, **characterized in that** the brush head retention element (7) is designed in the form of a pin.

15. Container (1) according to one of claims 13 to 14, **characterized in that** the cleaning opening (6) has several brush head retention elements (7).

16. Container (1) according to one of claims 13 to 15, **characterized in that** the at least one brush head retention element (7) is aligned vertically, horizontally, or diagonally.

17. Vehicle, in particular motor vehicle, washing system, comprising a container (1) according to one of claims 1 to 16.

18. Vehicle, in particular motor vehicle, washing system cleaning method, **characterized in that** a container according to one of claims 1 to 16 and/or a vehicle washing system according to claim 17 is used.

19. Use of a container according to one of claims 1 to 16 and/or a vehicle washing system according to claim 17 for cleaning vehicles.

## Revendications

1. Récipient de réception de tête de brosse à manche (1) pour installations de lavage de véhicules, en particulier de véhicules automobiles, comprenant un corps de base de réception (2) qui présente au moins une ouverture d'introduction (3) pour introduire une tête de brosse à manche (4) d'une brosse à manche (10) avec des poils (5), et au moins une ouverture de nettoyage (6) correspondant à l'ouverture d'introduction (3) pour nettoyer la tête de brosse à manche (4) et/ou de ses poils (5), **caractérisé en ce que** l'ouverture de nettoyage (6) est conçue de telle sorte que les poils (5) de la tête de brosse à manche (4) s'étendent au moins partiellement hors de l'ouverture de nettoyage (6) lors de l'utilisation.

2. Récipient (1) selon la revendication 1, **caractérisé en ce que** celui-ci (1) comporte un guide-balai à manche interne (8).

3. Récipient (1) selon la revendication 2, **caractérisé en ce que** le guide-brosse à manche interne (8) est conçu de telle sorte que, lors du passage de la brosse à manche (10) à travers le guide-brosse à manche interne (8), lors du passage de la tête de brosse à manche (4) à travers l'ouverture de nettoyage (6), la brosse à manche (10) s'appuie avec son extrémité supérieure contre une partie supérieure interne du guide-brosse à manche interne (8) et la brosse à manche (10) se fixe ainsi, empêchant ainsi la brosse à manche (10) de glisser.

4. Récipient selon la revendication 3, **caractérisé en ce que** le guide-brosse à manche intérieur (8) est conçu de telle sorte que, lors du passage de la brosse à manche (10) à travers le guide-brosse à manche intérieur (8) lors du passage de la tête de brosse à manche (4) à travers l'ouverture de nettoyage (6), la brosse à manche (10) avec son manche en dessous de son extrémité supérieure contre une deuxième partie centrale à inférieure du guide-balai intérieur (8) disposée en diagonale par rapport à la première partie supérieure intérieure, réalisant ainsi une fixation à trois surfaces/trois points du balai à manche (10) à l'intérieur du guide-balai intérieur (8).

5. Récipient (1) selon l'une des revendications 2 à 4, **caractérisé en ce que** le guide de brosse à manche (8) est conçu comme une pente, une courbure, une bascule ou un mécanisme d'abaissement.

6. Récipient (1) selon l'une des revendications 1 à 5, **caractérisé en ce que** l'ouverture de nettoyage (6) est conçue de telle sorte que, lors de l'utilisation, les poils (5) de la tête de brosse à manche (4) de la brosse à manche (10) s'étendent complètement hors de l'ouverture de nettoyage (6).

7. Récipient (1) selon l'une des revendications 1 à 6, **caractérisé en ce qu'**un réceptacle de liquide (20) est disposé sous l'ouverture de nettoyage (6) de telle sorte que, lors de l'utilisation, le liquide soit recueilli par les poils (5) de la tête de brosse à manche (4) de la brosse à manche (10).

8. Récipient (1) selon l'une des revendications 1 à 7, **caractérisé en ce que** la première partie intérieure supérieure comporte un logement de manche (21) de telle sorte que, lors de l'utilisation, le manche est logé de manière fixe.

9. Récipient (1) selon la revendication 8, **caractérisé en ce que** le logement de manche (21) est de forme concave arquée ou concave semi-circulaire.

10. Récipient (1) selon l'une des revendications 4 à 9, **caractérisé en ce que** la deuxième partie intérieure, centrale à inférieure, présente un rebord (22) ou une surface d'appui (22) de telle sorte que, lors de l'utilisation, le manche repose de manière fixe sur le rebord (22) ou la surface d'appui (22).

11. Récipient (1) selon l'une des revendications 4 à 10, **caractérisé en ce que** la deuxième partie intérieure, située entre le milieu et le bas, est conçue comme un plan incliné, de telle sorte que, lors de l'utilisation, la tête (4) de la brosse à manche (10) peut être insérée/est insérée par le haut dans l'ouverture (23) qui se rétrécit vers le bas.

12. Récipient (1) selon l'une des revendications 1 à 11, **caractérisé en ce qu'**il (1) comporte au moins une fenêtre de visualisation latérale (9) par rapport à l'ouverture de nettoyage (6).

13. Récipient (1) selon l'une des revendications 1 à 12, **caractérisé en ce que** l'ouverture de nettoyage (6) comporte au moins un élément de retenue de tête de brosse (7) pour empêcher la tête de brosse à manche (4) de la brosse à manche (10) de tomber de l'ouverture de nettoyage (6).

14. Récipient (1) selon l'une des revendications 1 à 13, **caractérisé en ce que** l'élément de retenue de tête de brosse (7) est conçu en forme de tenon.

15. Récipient (1) selon l'une des revendications 13 à 14, **caractérisé en ce que** l'ouverture de nettoyage (6) comporte plusieurs éléments de retenue de tête de brosse (7).

16. Récipient (1) selon l'une des revendications 13 à 15, **caractérisé en ce que** le au moins un élément de retenue de tête de brosse (7) est orienté verticalement, horizontalement ou en diagonale.

17. Installation de lavage de véhicules, en particulier de véhicules automobiles, comportant un récipient (1) selon l'une des revendications 1 à 16.

18. Procédé de nettoyage d'une installation de lavage de véhicules, en particulier de véhicules automobiles, **caractérisé en ce qu'**on utilise un récipient selon l'une des revendications 1 à 16 et/ou une installation de lavage de véhicules selon la revendication 17.

19. Utilisation d'un réservoir selon l'une des revendications 1 à 16 et/ou d'une installation de lavage de véhicules selon la revendication 17 pour nettoyer des véhicules.
